# EUROPEAN PATENT APPLICATION

(11) **EP 2 034 385 A2**
(43) Date of publication of application: **11.03.2009**
(21) Application number: 08252204.6
(22) Date of filing: 27.06.2008
(51) Int. Cl.: G06F 1/16

(54) **Electronic device with circuitry operative to change an orientation of an indicator and method for use therewith**

(30) Priority: 07.09.2007 US 899984
(71) Applicant: Sandisk Corporation, Milpitas, CA 95035 (US)
(72) Inventor: Niizawa, Derek T., Sunnyvale California 94086 (US); Conley, Kevin M., San Jose California 95138 (US); Sheba, Yaron, Mountain View California 94040 (US); Lee, Jennifer J., San Jose California 95138 (US)
(74) Representative: Frost, Alex John

(57) **Abstract**

An electronic device with circuitry operative to change an orientation of an indicator and method for use therewith are disclosed. In one embodiment, an electronic device is provided comprising a display device, a user interface element, an indicator displayed outside of the display device, and circuitry operative to change an orientation of the indicator when the electronic device changes between a first mode of operation and a second mode of operation. Methods for use with such electronic devices and other electronic devices are also provided. Other embodiments are disclosed, and each of the embodiments can be used alone or together in combination.

## Description

### Background

Electronic devices, such as digital media players, have several user interface elements, whose function can be indicated by indicators printed on or near the user interface elements. Consider, for example, an MP3 player having four buttons (play/pause, forward, menu/option, and reverse) positioned at twelve o'clock, three o'clock, six o'clock, and nine o'clock positions (as seen from a user viewing the buttons when the MP3 player is viewed in its intended orientation). To indicate the function of each button, an indicator (e.g., an icon or word/phrase) can be printed on or near each button. In this way, a user will readily know which button to push for a desired function.

Some electronic devices with a display device have the capability of displaying images in either landscape or portrait mode. When images are displayed in landscape mode, the user typically rotates the electronic device 90 degrees. It may be desired to keep the same functional configuration of buttons irrespective of the position of the electronic device (e.g., the button at the twelve o'clock position is play/pause in both the landscape and portrait modes). If the indicators on or near the buttons are printed or are otherwise in a fixed orientation, when a user rotates the electronic device 90 degrees counter-clockwise to view the display in landscape mode, the play/pause indicator will now be at the nine o'clock position even though the button at the twelve o'clock position performs the play/pause functionality. Additionally, the forward and reverse indicators, which were on or near the "left" and "right" buttons in the portrait orientation would be on or near the "up" and "down" buttons in the landscape orientation. Accordingly, the indicators are now mis-descriptive of the functions of the buttons. Additionally, the indicator itself would be oriented 90 degrees counter-clockwise (e.g., a play arrow pointing to the right when at the twelve o'clock position would be pointing "up" at the nine o'clock position). By not being in the correct orientation, such indicators can compromise the user experience.

### Summary

The present invention is defined by the claims, and nothing in this section should be taken as a limitation on those claims.

By way of introduction, the embodiments described below provide an electronic device with circuitry operative to change an orientation of an indicator and method for use therewith. In one embodiment, an electronic device is provided comprising a display device, a user interface element, an indicator displayed outside of the display device, and circuitry operative to change an orientation of the indicator when the electronic device changes between a first mode of operation and a second mode of operation.

In another embodiment, an electronic device is provided comprising a display device, a user interface element, a first area outside of the display device, a first light source positioned under the first area, wherein, when illuminated, the first light source causes the first area to display an indicator in a first orientation, a second area outside of the display device, a second light source positioned under the second area, wherein, when illuminated, the second light source causes the second area to display the indicator in a second orientation, and circuitry operative to illuminate the first light source when the electronic device is in a first mode of operation and illuminate the second light source when the electronic device is in a second mode of operation.

In yet another embodiment, a portable digital media player is provided comprising a display device, a memory, a user interface element, a first area outside of the display device, a first light source positioned under the first area, a first semi-transparent area disposed over the first light source, wherein the first semi-transparent area comprises an image of an indicator in a first orientation, a second area outside of the display device, a second light source positioned under the second area, a second semi-transparent area disposed over the second light source, wherein the second semi-transparent area comprises an image of the indicator in a second orientation, and circuitry operative to illuminate the first light source when the electronic device is in a first mode of operation and illuminate the second light source when the electronic device is in a second mode of operation, wherein the circuitry is further operative to play digital media content stored in the memory. Methods for use with such electronic devices are also provided. Other embodiments are disclosed, and each of the embodiments can be used alone or together in combination.

The embodiments will now be described with reference to the attached drawings.

### Brief Description of the Drawings

Figure 1A is an illustration of an electronic device of an embodiment in which indicators are displayed in a first orientation.

Figure 1B is an illustration of an electronic device of an embodiment in which indicators are displayed in a second orientation.

Figure 2 is a block diagram of an electronic device of an embodiment.

Figure 3 is an illustration of components of an electronic device of an embodiment.

Figure 4 is an illustration of a semi-transparent layer of an embodiment.

Figure 5 is a flowchart illustrating an operation of a digital media player of an embodiment.

Figure 6 is an illustration of a light pipe of an embodiment.

### Detailed Description of the Presently Preferred Embodiments

By way of introduction, the embodiments described below generally relate to electronic devices. An electronic device refers to a device that uses electricity for some or all of its functionality. Examples of electronic devices include, but are not limited to, a digital media player (e.g., an MP3 (or other music format) player, a video player, etc.), a game device, a digital camera, a mobile phone, a computer, a text messaging device, a personal digital assistant (PDA), and a remote control. An electronic device can be a wired or wireless device. An electronic device can be portable (e.g., very easy for a user to carry from one location to another) and handheld (e.g., the device can be operated without a desktop or other surface), such as when the electronic device takes the form of a digital media player or mobile phone. However, an electronic device can take a more stationary form, such as a relatively large device intended to be used on a desktop or other surface (e.g., a controller for a large number of separate devices). Although any type of electronic device can be used with these embodiments, the following description and drawings will be presented in terms of a portable digital media player. As used herein, the term "media" generally refers to audio and/or (still or moving) video (with or without audio), and the "player" can refer to a device that plays but does not record or a device that both plays and records digital content (from an internal or external source).

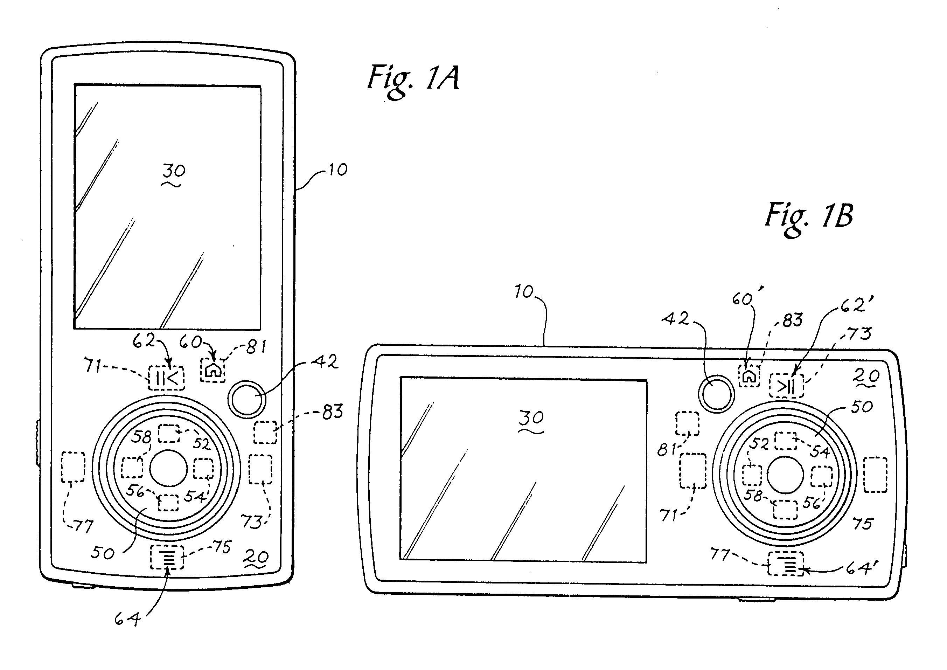

Turning now to the drawings, Figure 1A is an illustration of a portable media player 10 of an embodiment. As shown in Figure 1, the player 10 in this embodiment comprises a housing 20 and a display device 30 visible through a portion of the housing 20. The display device 30 can take any suitable form and, in one embodiment, is a liquid crystal display (LCD). The display device 30 is used in this embodiment to display a graphical user interface ("GUI") to facilitate user interaction with the player 10. The portable media player 10 also comprises a plurality of user interface elements 42, 50, 52, 54, 56, 58 and a plurality of indicators 60, 62, 64 displayed outside of the display device 30 but near some of the user interface elements 42, 52, 56 to indicate a function of those elements. The digital media player 10 can comprise additional components that are not shown in Figure 1 to simplify the drawing. These components can include, but are not limited to, a power input port, a power switch, an audio output port (e.g., a headphone jack), a video output port, a data port (e.g., a USB jack), a memory card slot, and a wireless (e.g., RF or IR) transmitter and/or receiver.

As used herein, a user interface element (or "user input element") refers to any type of component that facilitates user interaction with the electronic device (in this embodiment, with the player 10). A user input element can take any form including, but not limited to, a tactile element (such as a movable button, wheel, lever, switch, knob, etc.) or a touch-sensitive element (such as a capacitive or other type of touch pad that can sense contact (e.g., single contact or multiple contact (i.e., "tapping") and/or movement (e.g., linear, rotationally, etc.) of an object, such as a finger or stylus). One or more of the user interface elements can be used to allow a user to interact with a graphical user interface displayed on the display device 30 (e.g., by scrolling through multiple items, such as a list of songs or options, displayed on the graphical user interface). One or more of the user interface elements can instead be used to directly issue a command (i.e., without going through the graphical user interface) to the perform a function of the media player 10 (e.g., changing the volume, scrolling through pictures or frames in a moving video, performing a function in a game, etc.). As also used herein, an "indicator" refers to any indicia that can indicate a function of a user interface element. An indicator can take any suitable form, such as, but not limited to, an icon, one or more alpha-numeric characters, a symbol, a color, etc.

In Figure 1, the user interface elements comprise a button 42, a circular, touch-sensitive pad 50, and fours buttons 52, 54, 56, 58 (shown in dashed lines) under the touch-sensitive pad 50. (In other embodiments, instead of a touch-sensitive scroll wheel, a scroll wheel that physically turns can be used (e.g., a mechanical encoder that turns in a circular motion). Also, instead of a physical button, a touch-sensitive button can be used.) The fours buttons 52, 54, 56, 58 can be pushed by pushing the area of the circular, touch-sensitive pad 50 that overlies the button. In this embodiment, there are three displayed indicators: a home icon 60, a play/pause icon 62 (at the twelve o'clock position around the circular, touch-sensitive pad 50), and an options icon 64 (at the six o'clock position around the circular, touch-sensitive pad 50). (More or fewer indicators can be used in other embodiments.) Pressing the button 42 near the home icon 60 causes the media player 10 to display a "home" menu on the display device 30, pressing the button 52 under the touch-sensitive pad 50 near the play/pause icon 62 causes the media player 10 to play/pause a song, movie, or other media content, and pressing the button 56 under the touch-sensitive pad 50 near the option icon 64 causes the media player 10 to display one or more options on the display device 30.

Although the indicators 60, 62, 64 are shown in Figure 1 as being displayed adjacent to their respective user interface elements 42, 52, 56, in other embodiments, an indicator can be displayed on the user interface element, such as when the home icon 60 is displayed on button 42 or when the play/pause icon is displayed on the area of the circular, touch-sensitive pad 50 that overlies button 52. Also, it should be noted that players or other electronic devices in other embodiments can have more or fewer user interface elements and indicators (even just one user interface element and/or indicator) than the player 10 shown in Figure 1. Also, as shown in Figure 1, there is not necessarily a one-to-one correspondence between the user interface elements and indicators (e.g., the player 10 in Figure 1 does not contain a displayed indicator indicating the function of the touch-sensitive pad 50). Further, while the indicators 60, 62, 64 were shown on the front of the housing 20, some or all of the indicators 60, 62, 64 (or other indicators) can be located on other portions of the housing 20 (e.g., top, side, bottom, or back).

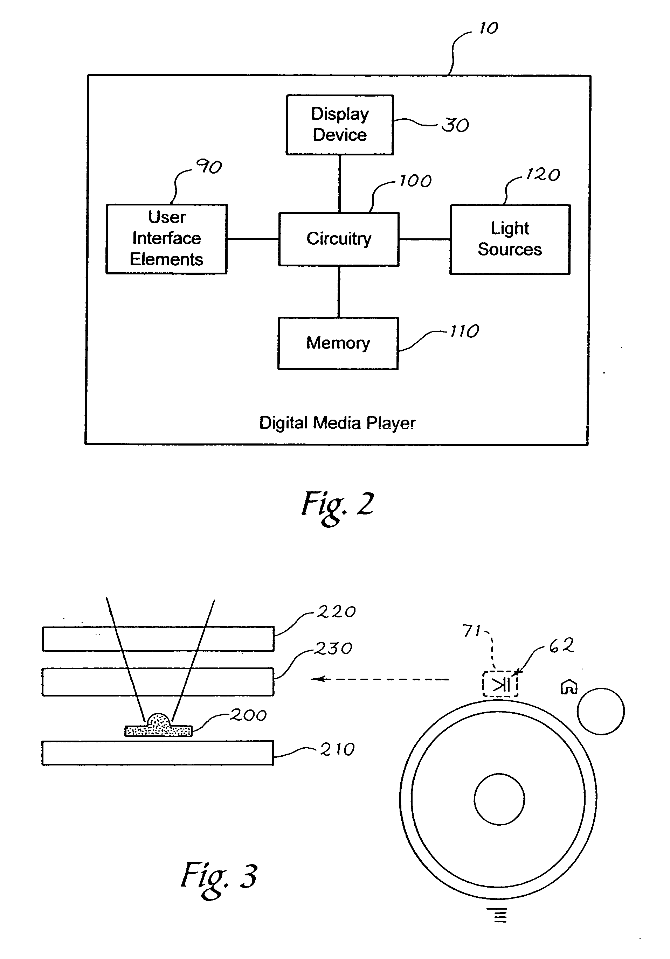

Figure 2 is a block diagram of the internal components of the player 10 that are housed by the housing 20. As shown in Figure 2, the player 10 comprises the display device 30, user interface elements (generally indicated here as 90), circuitry 100 operative to change an orientation of the indicator when the player 10 changes between a first mode of operation and a second mode of operation, memory devices (generally indicated here as memory 110), and light sources 120. (Although the user interface elements 90 are shown separately from the display device 30, these two components can be combined, such as when the display device 30 takes the form of a touch screen.) The memory 110 in the player 10 can take any suitable form (preferably solid state memory, but magnetic, optical, or other types of memory can be used) and can be used to store digital media for playback on the player 10 and software/firmware used for the operation of the player 10. Other components of the player 10 are not shown in Figure 2 to simply the drawing. These other components can include, but are not limited to, an amplifier, digital-to-analog converters, etc.

As mentioned above, the player 10 comprises circuitry 100 operative to change an orientation of the indicator when the player 10 changes between first and second modes of operation. "Circuitry" can include one or more components and be a pure hardware implementation and/or a combined hardware/software (or firmware) implementation. Accordingly, "circuitry" can take the form of one or more of a microprocessor or processor and a computer-readable medium that stores computer-readable program code (e.g., software or firmware) executable by the (micro)processor, logic gates, switches, an application specific integrated circuit (ASIC), a programmable logic controller, and an embedded microcontroller, for example. As mentioned above, the circuitry 100 in this embodiment is operative to change an orientation of the indicator when the player 10 changes between a first mode of operation and a second mode of operation (as explained below, this can take the form of selectively illuminating various ones of the light sources 120 in the first and second modes of operation). The circuitry 100 can be operative to perform other functions as well, such as playing digital media content stored in the memory 110 or other operations of the player 10.

A "mode of operation" can take any suitable form. In one embodiment, the player 10 is in one mode of operation when the player 10 displays images (still or moving video) on the display device 30 in portrait mode and in another mode of operation when the player 10 displays images on the display device 30 in landscape mode. The player 10 can change modes of operation manually or automatically. In one embodiment, the player 10 changes between the first and second modes of operation in response to user selection via a user interface element 10. For example, the user can change the player's mode of operation by pressing a dedicated button or by using one or more user interface elements to select an option displayed on the display device 30. The displayed option can explicitly describe the mode change (e.g., "portrait mode" and "landscape mode") or can implicitly describe the change (e.g., choosing "video" or "pictures" from a menu will cause the player 10 to change to a landscape mode). In another embodiment, the player 10 can contain position sensors that detect when a user rotates the player 10 to a sideways or landscape orientation and automatically change the operation of the player 10 to landscape operation. While landscape and portrait modes were used in these examples, it should be understood that "mode of operation" can include other types of modes.

As discussed in the background section above, if the indicators on or near user interface elements of the player are printed or are otherwise in a fixed orientation, when a user rotates the player 90 degrees counter-clockwise to view the display device in landscape mode, the indicators can be confusing or even mis-descriptive. To allow a user experience to be equally intuitive in both portrait and landscape modes, the circuitry 100 in this embodiment is operative to change an orientation of an indicator when the player 10 changes between first and second modes of operation (e.g., between portrait and landscape modes). The following paragraphs provide examples of some of the many mechanisms that can be used to provide this functionality. It should be understood that these are merely examples and that features from these examples should not be read into the claims unless explicitly recited therein.

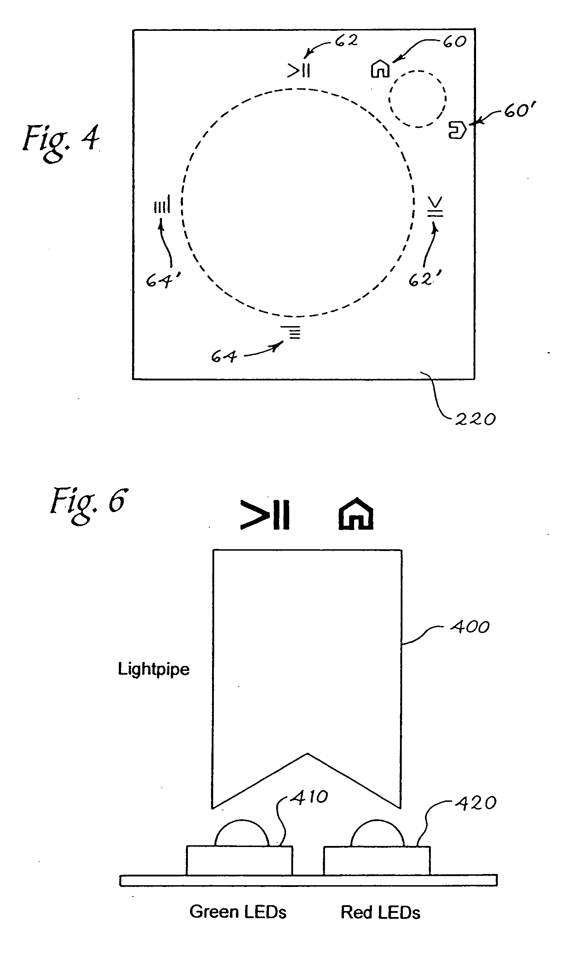

In this particular embodiment, there are various areas 71, 73, 75, 77, 81, 83 outside of the display device 30. Under each of the areas 71, 73, 75, 77, 81, 83 is a semi-transparent area comprising an image of an indicator in a certain orientation and a light source. In this embodiment, the circuitry 100 is operative to change an orientation of an indicator by selectively illuminating one or more of the light sources. This will be illustrated in more detail with respect to Figures 3 and 4.

Figure 3 shows area 71 on the player 10 and components in the housing 20 of the player. Specifically, under area 71 is a light source 200 that is located on a circuit board 210. The light source 200 is preferably a light-emitting diode ("LED"), although any type of light source 200 can be used. Over the light source 200 is a semi-transparent layer 220 that comprises an image of indicator 62. The semi-transparent layer 220 is preferably a foil layer made of an in-mold decoration ("IDM"). Indicator 62 is preferably printed in a 30% transparency, so when the light source 200 is not illuminated, indicator 62 is not visible. When the light source 200 is illuminated, the light source 200 causes indicator 62 to be visible in area 71 on the player 10. In this embodiment, a clear plastic layer 230 is disposed under the semi-transparent layer 220 to support the semi-transparent layer 220 and assist in the display of the indicator 62.

As shown in Figure 4, in addition to indicator 62, the semi-transparent layer 220 also comprises images of the other indicators shown in Figure 1A: the home icon 60 and the options icon 64. In addition, the semi-transparent layer 220 comprises images of these indicators in different positions and orientation. Specifically, the semi-transparent layer 220 comprise an image of another play/pause icon 62' oriented 90 degrees clockwise from play/pause icon 62 and located at the three o'clock position, another options icon 64' oriented 90 degrees clockwise from options icon 64 and located at the nine o'clock position, and another home icon 60' oriented 90 degrees clockwise from home icon 60 and located at the opposite corner near the cut-out for button 42. When the player 10 is in the first mode of operation (as shown in Figure 1A), the circuitry 100 illuminates the light sources under areas 71, 75, and 81 but does not illuminate the light sources under areas 73, 77, and 83. This results in indicators 62, 64, 60, respectively, being displayed (but not indicators 62', 64', 60'). However, when the player 10 is in the second mode of operation (as shown in Figure 1B), the circuitry 100 illuminates the light sources under areas 73, 77, and 83 but does not illuminate the light sources under areas 71, 75, and 81. This results in indicators 62', 64', 60', respectively, being displayed (but not indicators 62, 64, 60). Because indicators 62', 64', 60' are oriented 90 degrees clockwise and are positioned where they are, when the player 10 is rotated 90 degrees counter-clockwise, the indicators 62', 64', 60' will be in the correct orientation and position, thereby enhancing the user experience.

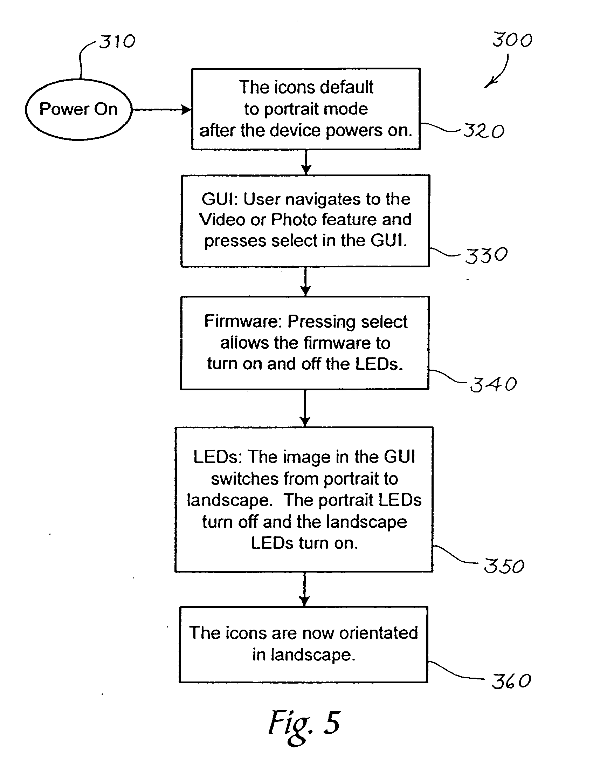

Figure 5 is a flow chart 300 illustrating the operation of the player 10 in this particular embodiment. It should again be noted that this is merely an example, and details of this example should not be read into the claims. When the player 10 is powered on (act 310), the icons default to the portrait mode (i.e., the first mode of operation) (act 320). That is, the light sources under areas 71, 75, and 81 are illuminated to display icons 62, 64, and 60, respectively. In this embodiment, to switch from the first mode of operation to the second mode of operation, the user navigates to the video or photo feature listed in a menu displayed on the display device 30 and presses select (the button in the center of the circular, touch-sensitive pad 50) (act 330). Pressing the select button allows the circuitry 100 (here, a processor executing firmware) to turn off/on the appropriate LEDs (act 340). Specifically, when the player 10 goes into the second mode of operation, the image in the GUI displayed in the display device 30 switches from portrait to landscape, and the circuitry 100 turns off the "portrait" LEDs and turns on the "landscape" LEDs (act 350). The icons would then be oriented in a landscape orientation (act 360).

There are many alternatives that can be used with these embodiments. For example, in the above example, there was one only indicator that could be displayed at a given position, and that indicator was either illuminated or not illuminated depending on the mode of operation of the player 10. For example, area 71 of the player 10 only contained a single indicator (play/pause icon 62), which was illuminated in the first mode of operation but not in the second mode of operation. Because of this, although there are four buttons 52, 54, 56, 58 under the circular, touch-sensitive pad 50, with the structure described above, only two of the buttons have displayed indicators near them at any one time. Accordingly, even though buttons 54 and 58 may have functionality in the portrait mode (e.g., forward and reverse), indicators are not displayed in areas 73 and 77 in portrait mode because those areas are dedicated for un-displayed indicators 62' and 64.'

In alternate embodiments, different type of structures can be used so that more than one indicator can be associated with a given area. For example, as shown in Figure 6, a light pipe 400 can be used below a given area. The light pipe 400 is designed so there are images of two or more indicators within the light pipe 400. In the example shown in Figure 6, there are images of two indicators: play/pause and home. There are two light sources positioned adjacent the light pipe 400: green LEDs 410 and red LEDs 420. Each color LED reflects light at different angles. Because the images of the two indicators are positioned in the light pipe 400 at those different angles, illuminating one of the LEDs 410, 420 will illuminate one of the indicators, and illuminating another one of the LEDs 410, 420 will illuminate the other one of the indicators. Because this allows two different indicators to be associated with a given area on the player 10, each area 71, 73, 75, 77 can have a displayed indicator in both the first and second modes of operation, thereby providing an indication of the function of all four buttons 52, 54, 56, 58 instead of just two of the buttons at a given time. Structures other than a light pipe or technology that backlights indicators with LEDS can be used to achieve the same functionality. For example, one or more of the areas 71, 73, 75, 77 can have a display device (preferably, much smaller than display device 30) that can display any type of indicator at any time and in any mode of operation.

Other alternatives can be used. For example, in the above embodiments, an indicator was displayed adjacent to its associated user interface element. In an alternate embodiment, one or more of the indicators can be displayed on the user interface element. (If a movable disc is used instead of a touch-sensitive pad 50, the disc could contain a transparent ring, be made of a transparent/translucent materials, etc. to allow the indicator to be viewable even when the disc moves.) In another alternative, by "blinking" the light sources on and off, the circuitry 100 can create an animated effect. In addition to drawing attention to the change of modes, the blinking lights can be used to indicate to the user which way to turn a user interface element, such as a wheel/disc, or indicate that the wheel/disc is being turned. As the wheel/disc is being rotated, a plurality of light sources arranged on, under, or near the wheel/disc can be sequentially illuminated to provide the appearance of movement of the lights. In another alternate embodiment, indicators may be displayed using different colors. For example, when the player 10 is in the first mode of operation, all indicators can be shown in one color to indicate portrait mode, and, when the player 10 is in the second mode of operation, all indicators can be shown in another color to indicate the landscape mode.

It should be noted that the orientation of the indicator can be changed with or without changing the position of the indicator. For example, in the embodiments shown in Figures 1A and 1B, the position of the indicator along with the orientation of the indicator changes. However in embodiments where more than one indicator can be associated with an area (e.g., by using a light pipe or a second display device, the orientation of the indicator can change without changing the position of the indicator. Accordingly, an indicator can change orientation with our without changing position, and changing position should not be read into the claims unless explicitly recited therein.

Some of the following claims may state that a component is operative to perform a certain function or configured for a certain task. It should be noted that these are not restrictive limitations. It should also be noted that the acts recited in the claims can be performed in any order - not necessarily in the order in which they are recited.

It is intended that the foregoing detailed description be understood as an illustration of selected forms that the invention can take and not as a definition of the invention. It is only the following claims, including all equivalents, that are intended to define the scope of this invention. Finally, it should be noted that any aspect of any of the preferred embodiments described herein can be used alone or in combination with one another.

## Claims

1. A method for changing an orientation of an indicator, the method comprising:
(a) displaying an indicator outside of a display device of an electronic device;
(b) determining that a mode of the electronic device is being changed from a first mode of operation to a second mode of operation; and
(c) changing an orientation of the indicator in response to the mode of the electronic device being changed to the second mode of operation.

2. The method of Claim 1, wherein the indicator is displayed in a first orientation in a first area on the electronic device when the electronic device is in the first mode of operation, and wherein the indicator is displayed in a second orientation in a second area on the electronic device when the electronic device is in the second mode of operation.

3. The method of Claim 2, wherein the orientation of the indicator is changed by illuminating a first light source positioned under a first area of the electronic device when the electronic device is in the first mode of operation and illuminating a second light source positioned under a second area of the electronic device when the electronic device is in the second mode of operation.

4. The method of Claim 1, wherein the electronic device changes between the first mode of operation and the second mode of operation in response to user selection via a user interface element of the electronic device.

5. The method of Claim 1, wherein the electronic device changes between the first mode of operation and the second mode of operation in response to a position of the electronic device.

6. The method of Claim 1, wherein the electronic device comprises a portable digital media player.

7. The method of Claim 1, wherein the display device displays images in a portrait style when the electronic device is in one of the first and second modes of operation, and wherein the display device displays images in a landscape style when the electronic device is in the other of the first and second modes of operation.

8. An electronic device comprising:
a display device;
a user interface element;
a first area outside of the display device;
a first light source positioned under the first area, wherein, when illuminated, the first light source causes the first area to display an indicator in a first orientation;
a second area outside of the display device;
a second light source positioned under the second area, wherein, when illuminated, the second light source causes the second area to display the indicator in a second orientation; and
circuitry operative to illuminate the first light source when the electronic device is in a first mode of operation and illuminate the second light source when the electronic device is in a second mode of operation.

9. The electronic device of Claim 8 further comprising:
a first semi-transparent area disposed over the first light source, wherein the first semi-transparent area comprises an image of the indicator in the first orientation; and
a second semi-transparent area disposed over the second light source, wherein the second semi-transparent area comprises an image of the indicator in a second orientation.

10. The electronic device of Claim 8, wherein the display device displays images in a portrait style when the electronic device is in one of the first and second modes of operation, and wherein the display device displays images in a landscape style when the electronic device is in the other of the first and second modes of operation.
